Europäisches Patentamt

European Patent Office

Office européen des brevets

(11) Numéro de publication : **0 300 942 B1**

(12)

# FASCICULE DE BREVET EUROPEEN

(45) Date de publication du fascicule du brevet :
**04.03.92 Bulletin 92/10**

(51) Int. Cl.⁵ : **H04L 12/56**

(21) Numéro de dépôt : **88460012.3**

(22) Date de dépôt : **12.07.88**

(54) **Système de commutation de paquets de données à priorités.**

(30) Priorité : **16.07.87 FR 8710255**

(43) Date de publication de la demande :
**25.01.89 Bulletin 89/04**

(45) Mention de la délivrance du brevet :
**04.03.92 Bulletin 92/10**

(84) Etats contractants désignés :
**BE CH DE ES GB IT LI LU NL SE**

(56) Documents cités :
**EP-A- 0 033 672
EP-A- 0 113 639
EP-A- 0 201 252
COMPUTER NETWORKING SYMPOSIUM,
Washington, DC, 17-18 novembre 1986, pages
141-150, IEEE, New York, US; S. NOJIMA et al.:
"High-speed packet switching network for
multi-media information"
IEEE GLOBAL TELECOMMUNICATIONS
CONFERENCE, Atlanta, Georgia, 26-29
novembre 1984, vol. 1 de 3, pages 121-125,
IEEE, New York, US; A. HUANG et al.:
"Starlite: a wideband digital switch"**

(73) Titulaire : **ETAT FRANCAIS représenté par le
Ministre des PTT (Centre National d'Etudes
des Télécommunications)
38-40 rue du Général Leclerc
F-92131 Issy-les-Moulineaux (FR)**

(72) Inventeur : **Quinquis, Jean-Paul
rue de Cornic
F-22700 Perros-Guirec (FR)**
Inventeur : **Servel, Michel
Le Rhu en Servel
F-22300 Lannion (FR)**
Inventeur : **Francois, Joel
Prat Cottel Bihan St. Quay Perros
F-22700 Perros-Guirec (FR)**

(74) Mandataire : **Le Guen, Louis François
CABINET Louis LE GUEN 38, rue Levavasseur
B.P. 91
F-35802 Dinard Cédex (FR)**

## Description

La présente invention concerne un système de commutation de paquets d'information affectés de priorités sémantiques différentes, entre des multiplex temporels entrants et des multiplex temporels sortants. Un tel système est déjà connu de COMPUTER NETWORKING SYMPOSIUM, Washington, DC, 17-18 novembre 1986, pages 141-150, IEEE, New York, US; S. NOJIMA et al.: "High-speed packet switching network for multi-media information".

Dans un réseau de commutation temporelle asynchrone, l'information transmise, qui peut être du son, des données, des images numérisées ou des messages de signalisation, est acheminée sous forme de paquets de bits, chaque paquet comportant une étiquette permettant de définir la source dont il provient et l'acheminement qu'il convient de lui donner dans le réseau.

Le système de commutation décrit dans le document EP-A-0 113 639 est particulièrement adapté pour constituer chaque noeud de commutation dans un réseau de commutation temporelle asynchrone. Ce système de commutation commute des paquets d'une longueur fixe de 128 bits et comportant une étiquette de 8 bits, qui sont portés, par exemple, sur seize multiplex entrants vers seize multiplex sortants. Le document EP-A-0 108 028 décrit une structure de multiplex découpé en intervalles de temps égaux où chaque paquet occupe un intervalle de temps et où chaque intervalle de temps ne transportant pas de paquet d'information provenant d'une source est rempli par un paquet "vide", c'est-à-dire un paquet dont l'étiquette fixe est réservée à ce type de paquet et ne peut être utilisée pour un paquet d'information. Le motif des bits qui suivent l'étiquette d'un paquet vide est aussi particulier. En pratique, les paquets vides servent à assurer la synchronisation de ces multiplex.

Dans le système de commutation du document EP-A-0 113 639, la fonction commutation de paquets consiste à associer à chaque paquet entrant, identifié par son numéro de multiplex entrant parmi plusieurs et son étiquette, une nouvelle identification elle-même caractérisée par deux attributs de même type, c'est-à-dire une nouvelle étiquette et le numéro du multiplex sortant parmi plusieurs qui va délivrer le paquet. Sous une autre forme, on commute le paquet $(e, i)$, où $e$ est le numéro du multiplex entrant et $i$ l'étiquette, en un paquet sortant $(s, j)$, où $s$ est le numéro du multiplex sortant et $j$ la nouvelle étiquette.

Dans cette commutation de paquets, une première action est entreprise sur le paquet $(e, i)$ avant son rangement dans une mémoire tampon, cette action consistant en une "conversion d'étiquette" qui est effectuée par une mémoire de commande qui a été programmée lors de l'établissement de la communication, encore appelée circuit virtuel. Ainsi, l'étiquette $i$ est remplacée par l'étiquette $j$. Le paquet $(e, j)$ est alors rangé dans la mémoire tampon à une adresse connue, fonction de l'instant d'écriture défini par $e$. Cette adresse est stockée dans une file d'attente associée au multiplex sortant $s$. Le système est commandé par la sortie et, au cours de chaque cycle d'exploration des multiplex sortants, la file d'attente associée au multiplex sortant $s$ est lue pour délivrer l'adresse du prochain paquet que le multiplex sortant $s$ aura à porter.

La mémoire tampon comprend donc un ensemble de N zones de mémoire par multiplex entrant et les paquets provenant d'un multiplex entrant $e$ sont écrits dans une zone parmi N zones affectées à ce multiplex entrant, l'adresse d'écriture d'un paquet étant incrémentée modulo-N à chaque opération d'écriture nouvelle. Dans chaque ensemble, les opérations d'écriture sont cycliques, c'est-à-dire que le $i^e$ paquet sera écrasé à l'écriture du $(i+N)^e$ paquet. Un paquet ne peut donc séjourner dans la mémoire tampon plus de N "temps paquets".

La gestion de la mémoire tampon en écriture est donc simple, mais, dans le cas où un multiplex sortant $s$ subit une pointe de trafic, c'est-à-dire se trouve destinataire d'un nombre de paquets très supérieur à la moyenne, un paquet entrant peut attendre plus de N temps paquet avant d'être lu, si bien qu'il se trouve écrasé par un nouveau paquet entrant et qu'il est perdu. Cet incident n'a pas toujours la même portée selon que la communication concerne du son, des images ou des messages. En effet, par exemple, le son, même de bonne qualité, accepte un taux d'erreurs supérieur à celui des messages. Par contre, dans la transmission de certains messages, la perte d'un paquet rend le message incompréhensible.

On peut tenter d'éviter, dans une certaine mesure, cet inconvénient en augmentant N. Mais, outre le coût dû au volume de mémoire supplémentaire, on risque alors de perturber d'autres transmissions, telles que la transmission du son. En effet, pour restituer un son de haute qualité, le délai de transmission des paquets dans le réseau doit rester inférieur à une limite prédéterminée et un paquet ne doit donc pas séjourner plus d'un temps donné dans chaque commutateur, ce qui conduit à ne pas choisir N trop grand.

Un objet de l'invention consiste à prévoir un système qui permet de surmonter les difficultés mentionnées.

Un tel système fait également l'objet de la demande EP-A-300 941, déposée le même jour que la présente demande, dans lequel on affecte aux paquets des priorités sémantiques et dans lequel sont prévus des moyens pour ne plus adresser, en écriture, la mémoire tampon de façon cyclique, mais en fonction des zones de la mémoire déjà occupées par des paquets à priorité sémantique de haut niveau.

Suivant une caractéristique de l'invention, il est prévu d'affecter à chaque paquet l'un de deux niveaux de priorité, l'adresse de lecture d'un paquet dans la mémoire tampon du commutateur étant rangée dans la file d'attente affectée à la jonction sortante destinée à transmettre le paquet, accompagnée d'un bit définissant le niveau de priorité du paquet, chaque file d'attente comprenant en série entre l'entrée et la sortie deux zones, l'écriture dans la première zone n'étant, quand la seconde zone est pleine, accessible qu'aux paquets de haut niveau de priorité, et, en cas de débordement de la seconde zone, entre deux lectures de file, des adresses de lecture de paquets de bas niveau de priorité, qui avaient été mémorisées plus tôt dans la seconde zone que l'adresse de lecture de paquet de haut niveau de priorité la plus ancienne encore présente dans la file, étant détruites en nombre égal, au maximum, au nombre d'adresses de lecture mémorisées dans la première zone.

Suivant une autre caractéristique, en cas de débordement de la seconde zone avec M adresses de lecture dans la première zone et plus de M adresses de lecture de paquets de bas niveau de priorité entre l'adresse de lecture présente à la sortie de la file et la plus ancienne adresse de lecture de paquet de haut niveau de priorité contenue dans la seconde zone, après le temps de lecture de la file concernée, à chacun des M temps d'octets suivants, la file subit un décalage.

Suivant une autre caractéristique, en cas de débordement de la seconde zone avec M adresses de lecture dans la première zone et moins de M adresses de lecture de paquet de bas niveau de priorité entre l'adresse présente à la sortie de la file et la plus ancienne adresse de lecture de paquet de haut niveau de priorité contenue dans la seconds zone, après le temps de lecture de la file concernée, la file subit assez de décalages pour que l'adresse de lecture de paquet de haut niveau de priorité soit présente à la sortie de la file, les décalages étant effectués séquentiellement au rythme des temps octets après le temps de lecture.

Suivant une autre caractéristique, chaque file est associée à un circuit de traitement et comporte une entrée de données pour recevoir, d'une part, le mot d'adresse de lecture et, d'autre part, le bit de niveau de priorité, soit "1" pour le niveau bas et "0" pour le niveau haut, une entrée d'autorisation d'écriture, une entrée d'horloge d'écriture, une sortie de données délivrant, d'une part, le mot d'adresse de lecture et, d'autre part, le bit de priorité, une entrée d'autorisation de décalage, une entrée d'horloge de lecture, une sortie d'indication de seconde zone pleine et une sortie d'indication de première zone non vide, le circuit de traitement comprenant une première porte ET dont une entrée reçoit le signal de sélection d'autorisation d'écriture dans la file et dont la seconde entrée est reliée à la sortie d'une porte NON-ET dont une entrée reçoit le bit de priorité et dont l'autre est reliée à la sortie d'indication de seconde zone pleine, la sortie de la première porte ET étant reliée à l'entrée d'autorisation d'écriture.

Suivant une autre caractéristique, le circuit de traitement comporte encore une porte OU dont une entrée est activée à chaque temps de lecture de la file et dont une seconde entrée est reliée à la sortie d'une seconde porte ET dont une entrée est reliée à la sortie de bit de priorité et l'autre à la sortie d'un circuit de mémoire dont l'entrée est reliée à la sortie d'indication de première zone non vide et dont l'entrée de remise à zéro est activée quand la sortie d'indication de première zone non vide est désactivée et que l'adresse de lecture présente à la sortie correspond à un paquet de bas niveau de priorité, la remise à zéro étant retardée d'un temps octet.

Suivant une autre caractéristique, l'affectation de l'un de deux niveaux de priorité à chaque paquet est effectué en même temps que la conversion d'étiquette d'entrée en étiquette de sortie et la sélection d'une ou de plusieurs files d'attente dans lesquelles est rangée l'adresse de lecture du paquet, le bit définissant le niveau de priorité étant fourni par le moyen de conversion d'étiquette.

Suivant une autre caractéristique, ledit moyen de conversion d'étiquette fournit un bit de niveau de priorité commun vers toutes les files d'attente dans lesquelles est rangée l'adresse de lecture du paquet.

Suivant une autre caractéristique, ledit moyen de conversion d'étiquette fournit sélectivement le bit de haut niveau de priorité vers certaines parmi les files d'attente dans lesquelles est rangée l'adresse de lecture du paquet, et le bit de bas niveau de priorité vers les autres.

Suivant une autre caractéristique, le chargement des informations de commande concernant la conversion, la sélection de files d'attente et l'affectation des niveaux de priorité est effectué dans le moyen de conversion au moment de l'établissement de la communication.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est un bloc-diagramme d'un commutateur de paquets suivant l'invention,
la Fig. 2 est un schéma illustrant le fonctionnement de la mémoire tampon du commutateur de la Fig. 1,
la Fig. 3 est un schéma du circuit d'aiguillage du commutateur de la Fig. 1,
les Figs. 4a à 9a sont des diagrammes temporels illustrant divers cas de fonctionnement d'une des files de commande du circuit d'aiguillage de la Fig. 3, et
les Figs. 4b à 9b sont des diagrammes qui sont respectivement associés à ceux des Figs. 4a à 9a pour illustrer comment le contenu de file d'attente concernée varie selon le cas de fonctionnement.

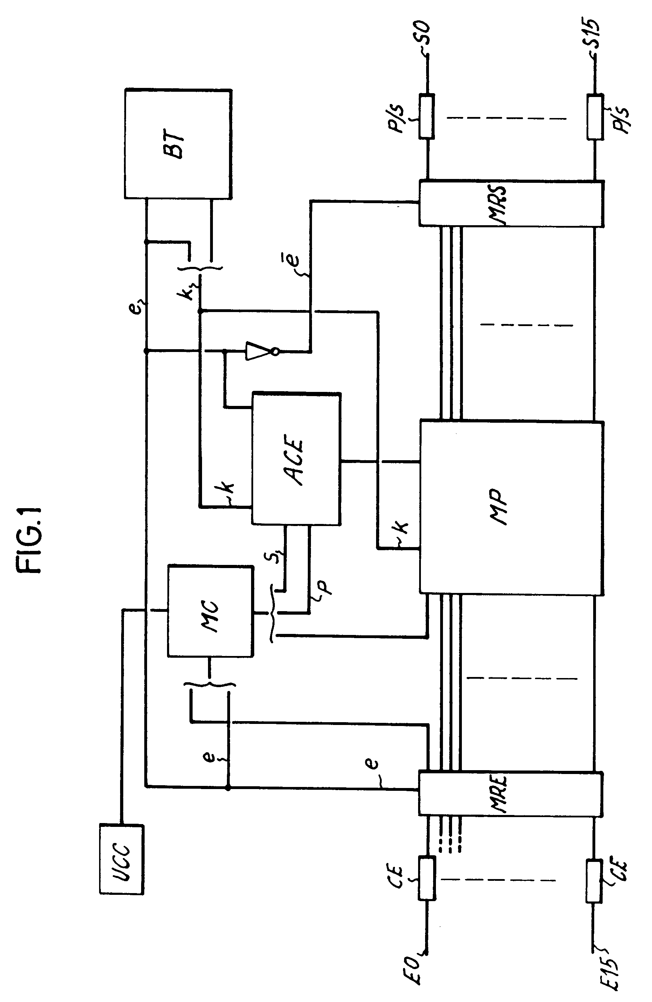

Le commutateur de la Fig. 1 est du type du commutateur décrit dans le document EP-A-0 113 639, mais s'en distingue par le contenu de son circuit d'aiguillage ACE.

Le commutateur comporte seize jonctions d'entrée E0 à E15 et seize jonctions de sortie S0 à S15, qui portent chacune un multiplex de paquets de longueur fixe, tel que celui qui est décrit dans le document EP-A-0 108 028. Sur chacune des jonctions d'entrée E0 à E15, est prévu un circuit d'entrée CE qui convertit chaque octet série en un octet parallèle et qui cadre les débuts de paquets de manière que d'une jonction d'entrée à la suivante, ces débuts soient délivrés avec un décalage d'un octet. Les sorties des circuits d'entrée CE sont reliées aux entrées correspondantes d'une matrice de rotation d'entrée MRE qui effectue une conversion parallèle-diagonale ou encore une conversion "paragonale". Après conversion paragonale, les étiquettes des paquets sont toutes délivrées séquentiellement par la première sortie de la matrice d'entrée MRE tandis que la deuxième sortie délivre les seconds octets des paquets, la troisième les troisièmes octets, etc. Chaque étiquette $i$, accompagnée du rang $e$ de la jonction entrante qui l'a portée, est appliquée à la mémoire de traduction d'étiquette MC qui, d'une part, délivre la nouvelle étiquette $j$ et, d'autre part, l'information $s$ de sélection d'une ou de plusieurs files d'attente dans le circuit d'aiguillage ACE. De plus, ce qui n'existait pas dans le commutateur du document EP-A-0 113 639, la mémoire MC délivre, vers le circuit d'aiguillage ACE, un signal $p$ sous la forme d'un bit qui est mis à "1" quand le paquet n'est pas prioritaire et à "0" quand le paquet est prioritaire.

La sortie de la mémoire MC qui délivre la nouvelle étiquette $j$, sur huit fils, est reliée à la première entrée de la mémoire tampon MP dont les autres entrées sont reliées aux sorties correspondantes de la matrice MRE. Les sorties de la mémoire tampon MP sont reliées aux entrées correspondantes de la matrice de rotation de sortie MRS dont les sorties sont respectivement reliées à des convertisseurs parallèle-série P/S dont les sorties sont respectivement reliées aux jonctions sortantes S0 à S15.

Le commutateur de la Fig. 1 comprend encore une unité centrale de commande UCC qui, en fonction des circuits virtuels établis dans le réseau, fournit à la mémoire MC les informations de traduction des étiquettes, et une base de temps BT qui fournit, à partir d'une horloge bit locale, l'horloge octet, le mot $e$ et un mot $k$. A titre d'exemple, pour un commutateur comportant seize jonctions entrantes, le mot $e$ se compose de quatre bits. Le mot $k$ comporte $x$ bits, $x$ étant supérieur à quatre. Les deux mots $e$ et $k$ sont engendrés dans la base de temps BT par un compteur binaire comportant $x$ étages dont les quatre premières sorties délivrent le mot $e$ et l'ensemble des sorties le mot $k$, le compteur étant incrémenté au rythme de l'horloge octet. Le mot $e$ porté par la liaison $e$, Fig. 1, sert à commander la matrice de rotation d'entrée MRE, à identifier les jonctions entrantes vers la mémoire MC, et à explorer les files d'attente dans le circuit d'aiguillage. Son inverse $e/$, obtenu par l'inverseur INV et porté par la liaison $e/$, sert à commander la matrice de rotation de sortie MRS.

Le mot $k$ sert d'adresse d'écriture dans la mémoire tampon MP, cette adresse d'écriture étant mémorisée dans la ou les files d'attente qui sont sélectées par l'information $s$ provenant de la mémoire MC. A la sortie de la mémoire MC, le faisceau de fils transmettant l'information $s$ comprend autant de fils que de files d'attente. Dans le cas où un paquet entrant doit être diffusé sur plusieurs jonctions sortantes, les fils du faisceau $s$ correspondant à ces jonctions sortantes sont marqués. Enfin, la sortie du circuit d'aiguillage ACE fournit les adresses de lecture dans la mémoire tampon MP.

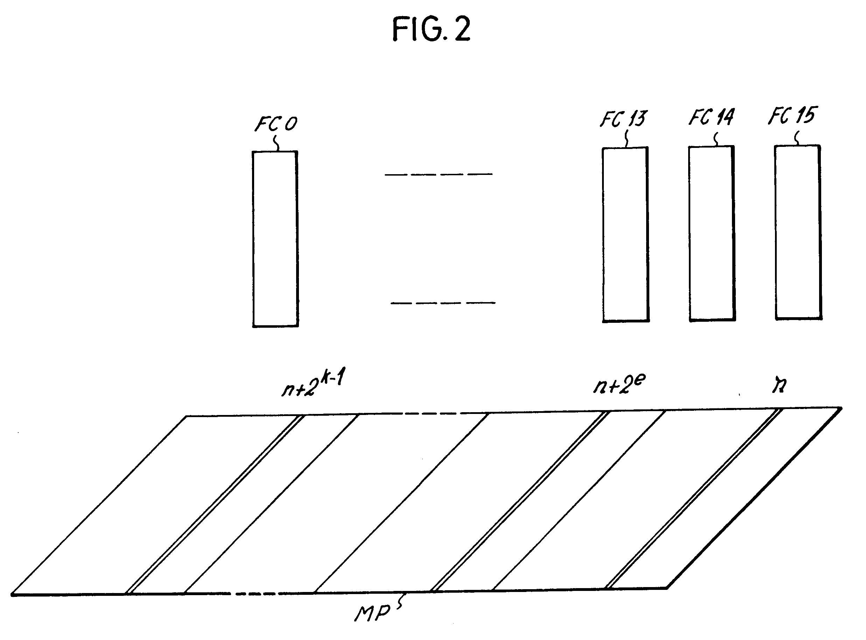

La Fig. 2 illustre l'arrangement en diagonale des paquets mémorisés dans la mémoire tampon MP, cette dernière comportant seize rangées de $2^k$ mémoires élémentaires mémorisant chacune un octet parallèle. Il apparaît que cette mémoire se subdivise en $2^{(k-e)}$ colonnes diagonales, chaque colonne diagonale mémorisant seize paquets appartenant respectivement aux seize jonctions entrantes. Ainsi, pour $e=4$, les paquets successifs provenant de la jonction entrante En sont respectivement mémorisés aux adresses $n$, $(n+16)$, $(n+32)$, $(n+48)$, ..., $(n + 2^{k-1})$, puis de nouveau $n$, $(n+16)$, etc.

A la Fig. 2, au-dessus de la mémoire tampon MP, on a fait figurer seize files d'attente FC0 à FC15 dans lesquelles sont mémorisées les adresses de lecture des paquets. La capacité de ces files ne pouvait, dans le commutateur du document EP-A-0 113 639, dépasser $2^{k-e}$ car, après un temps égal à $2^{k-e}.T$, où T est la durée du cycle d'exploration des jonctions sortantes S0 à S15, tout paquet écrit dans la mémoire tampon MP est écrasé. A noter que T est égal à $16.t0$, où t0 est la période de l'horloge octet.

Ainsi le choix de la taille $x$ du mot $k$ détermine la taille de la mémoire MP. Comme on l'a mentionné dans le préambule, plus cette taille est grande, moins grand est le risque d'écrasement, mais plus grands et variables peuvent être les intervalles de temps entre paquets d'un même circuit virtuel délivrés sur une même jonction sortante, ce qui est un inconvénient, un autre inconvénient résultant du coût du volume de mémoire supplémentaire. Dans l'exemple de réalisation décrit, on a choisi $x$ égal à huit, ce qui correspond à seize colonnes diagonales dans la mémoire MP, ce nombre huit étant le résultat d'un compromis conduisant à une efficacité optimale du commutateur.

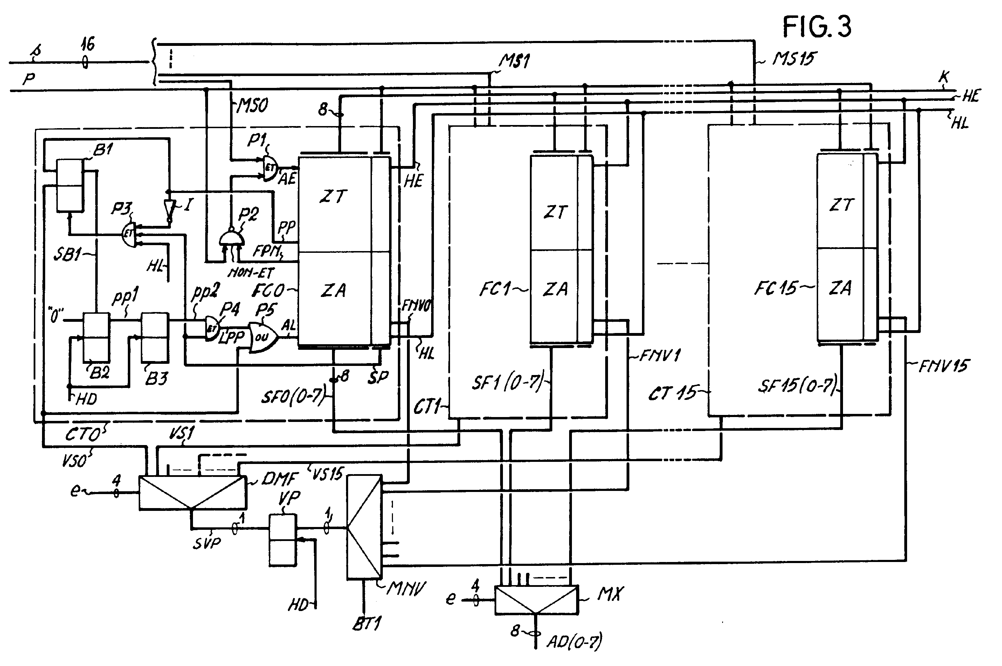

Suivant l'invention, pour diminuer la probabilité pour les paquets prioritaires d'être écrasés dans la mémoire MP, chaque file de commande du circuit d'aiguillage ACE est prévue pour mémoriser des mots de (x+1) bits, les x premiers correspondant au mot $\underline{k}$ et le dernier au signal $\underline{p}$ délivré par la mémoire MC, Fig. 1. A chaque file d'attente est associé un circuit logique permettant, s'il le faut, de traiter différemment les paquets ordinaires et les paquets prioritaires, comme on va le voir en relation avec la Fig. 3.

Le circuit d'aiguillage ACE de la Fig. 3 comprend seize circuits de traitement identiques CT0 à CT15, un multiplexeur MNV, une bascule VP, un démultiplexeur DMF et un multiplexeur MX. Les circuits CT0 à CT15 sont associés chacun à une des files d'attente FC0 à FC15.

Les circuits CT0 CT15 étant identiques, on ne décrira en détail que le circuit CT0. La file d'attente FC0 a une entrée de données qui reçoit le mot $\underline{k}$ de la base de temps BT, plus le signal $\underline{p}$ de la mémoire de traduction d'étiquette MC, une sortie de données qui délivre l'adresse de lecture SF0 et un signal SP, une entrée d'horloge d'écriture HE, une entrée d'horloge de lecture HL, une entrée d'autorisation d'écriture AE et une entrée d'autorisation de décalage AL. Le signal de sortie SP correspond au signal $\underline{p}$ associé à l'adresse SF0 qui est présente à la sortie de données de la file. De plus, la file FC0 est divisée en deux zones ZT et ZA, arrangées en série entre l'entrée et la sortie de données, et elle est pourvue d'une sortie FPN indiquant que la zone ZA est pleine et d'une sortie PP indiquant que la zone ZT contient au moins un mot.

Le faisceau $\underline{s}$ comporte seize fils MS0 à MS15 lesquels sont respectivement associés aux files FC0 à FC15. Le fil transmettant le signal $\underline{p}$ est multiplé deux fois sur les entrées correspondantes des circuits CT0 à CT15. Les sorties de données SF0 à SF15 des files FC0 à FC15 sont respectivement reliées aux seize entrées du multiplexeur MX dont la sortie délivre les adresses de lecture à la mémoire tampon MP. Les sorties FNV0 à FNV15 sont respectivement reliées aux seize entrées du multiplexeur MNV dont la sortie est reliée à l'entrée de données de la bascule VP dont l'entrée d'horloge reçoit un signal HD. La sortie Q de la bascule VP délivre le signal SVP et est reliée à l'entrée du démultiplexeur DMF dont les seize sorties délivrent les signaux VS0 à VS15 vers les circuits CT0 à CT15, respectivement. Les entrées de commande du démultiplexeur DMF et des multiplexeurs MNV et MX reçoivent respectivement des signaux $\underline{e}$, BT1 et $\underline{e}$, les bornes d'entrée du démultiplexeur DMF et les bornes de sortie des multiplexeur MNV et MX étant câblées de manière que l'incrémentation modulo 16 du mot $\underline{e}$ provoque une exploration par décrémentation de 15 à 0.

L'entrée AE de la file FC0 est reliée à la sortie d'une porte ET P1 dont une entrée est reliée au fil MS0 et l'autre à la sortie d'une porte NON-ET P2. Une entrée de la porte P2 est reliée au fil $\underline{p}$ et l'autre à la sortie FPN de la file. La sortie PP de la file est reliée, d'une part, à l'entrée de signal d'une bascule B1 et, d'autre part, à l'entrée d'un inverseur I dont la sortie est reliée à la première entrée d'une porte ET P3 à trois entrées dont la seconde est reliée à la sortie SP de la file et dont la troisième reçoit le signal HL. La sortie de la porte P3 est reliée à l'entrée de remise à zéro RAZ de la bascule B1 dont l'entrée d'horloge est reliée à la sortie VS0 du démultiplexeur DMF. La sortie Q de la bascule B1, qui transmet le signal SB1, est reliée à l'entrée de mise à "1" d'une bascule B2 dont l'entrée de signal est à "0" et dont l'entrée d'horloge reçoit le signal HD. La sortie Q de la bascule B2, qui transmet le signal pp1, est reliée à l'entrée de signal d'une bascule B3 dont l'entrée d'horloge reçoit le signal HD. La sortie Q de la bascule B3, qui transmet le signal pp2, est reliée à une entrée d'une porte ET P4 dont la seconde entrée reçoit le signal SP. La sortie de la porte P4 est reliée à une entrée d'une porte OU P5 dont l'autre entrée est reliée à la sortie VS0 du démultiplexeur DMF et dont la sortie est reliée à l'entrée d'autorisation de décalage AL de la file FC0.

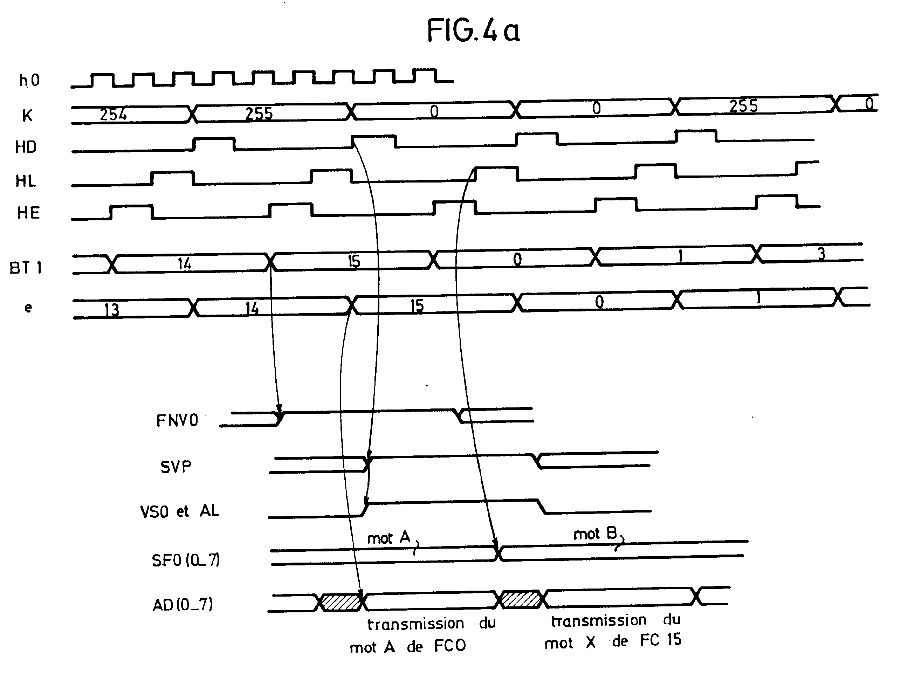

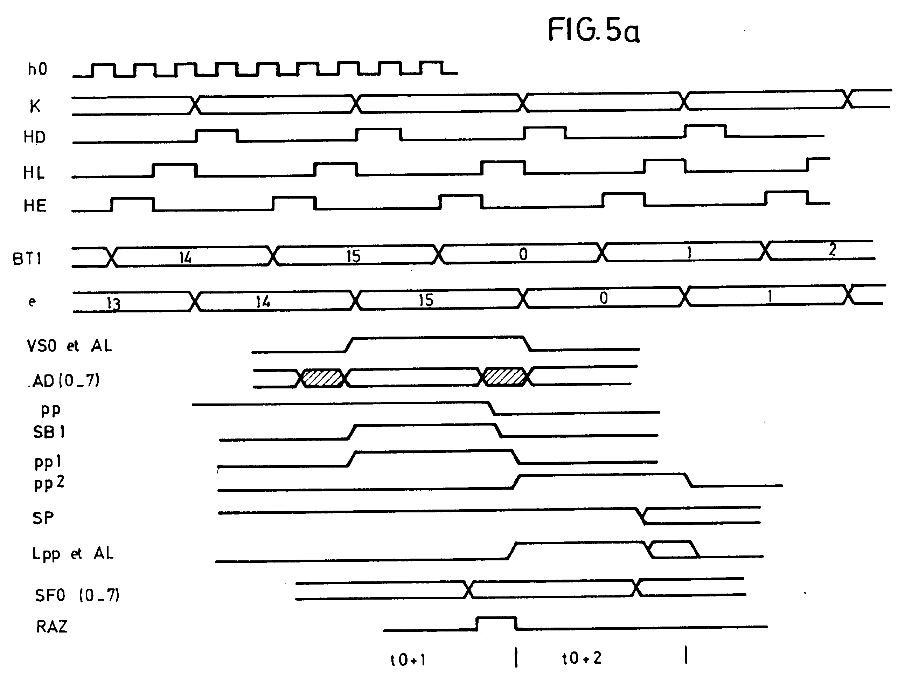

Les diagrammes temporels des signaux HE, HL, HD, $\underline{k}$, BT1 et $\underline{e}$ sont montrés à la Fig. 4a, ainsi d'ailleurs qu'aux Figs. 5a à 9a. Le signal hO est un signal de période double de celle de l'horloge bit du commutateur. Le signal $\underline{k}$, disponible sur huit fils, est incrémenté toutes les quatre périodes de hO, c'est-à-dire à chaque temps octet. Par sa valeur, le mot $\underline{k}$ définit une adresse d'écriture variant de 0 à 255. Le signal HD est au niveau haut pendant les deux premiers temps bit d'un temps octet et au niveau bas pendant les six temps bit suivants. Le signal HL est en avance de deux temps bit par rapport au signal HD et le signal HE est en avance de deux temps bit par rapport au signal HL. Le signal BT1, disponible sur quatre fils, est incrémenté à chaque temps octet, comme le signal $\underline{k}$, mais est en avance d'un demi-temps d'octet par rapport à lui. Le signal $\underline{e}$, disponible sur quatre fils, est incrémenté à chaque temps d'octet et en retard d'un demi-temps d'octet sur le signal BT1. Quand le signal MS0, délivré par le mémoire MC,est à "1", il y a demande d'écriture dans la file FC0 et, quand il est à "0", il n'y a pas de demande vers cette file. Plus particulièrement, l'écriture, quand elle est demandée, est effectuée sur le front montant du signal HE.

Comme le montre la Fig. 3, l'écriture est autorisée pour toute demande quand le signal FPN est à "0", car la sortie de la porte NON-ET P2 est à "1", quel que soit l'état du signal $\underline{p}$. Le passage au niveau "1" du fil MS0 ouvre alors la porte P1 et le signal AE autorise l'écriture dans la file du mot $\underline{k}$ courant, ce qui est effectué par le signal HE dont le front montant apparaît au milieu du temps octet.

Quand le signal FPN est à "1", indiquant que la zone ZA est pleine, la sortie de la porte P2 ne peut être à "1" que si le fil $\underline{p}$ est à "0". Il n'y aura donc autorisation d'écriture (AE = 1) que si le paquet concerné est prioritaire (p = 1). Chaque mot $\underline{k}$ correspondant à

un paquet prioritaire incident et destiné à la sortie S0 est écrit et décalé dans la file FC0, mais se retrouve dans la zone ZT. Les mots k correspondant à des paquets non prioritaires ne sont pas écrits dans la file FC0. Le contenu de ces paquets non prioritaires dans la mémoire MP sera perdu.

Le signal e est un mot de quatre bits dont la valeur varie cycliquement de 0 (0000) à 15 (1111) au rythme octet pour explorer respectivement les files FC15 à FC0 afin de transmettre des adresses de lecture à la mémoire tampon MP à travers le multiplexeur MX. Le signal BT1 est aussi un mot de quatre bits qui prend les mêmes valeurs que le signal e, mais avec une avance d'un demi-temps octet. On verra dans la suite comment est utilisé le signal BT1.

Dans la suite, on va examiner six cas significatifs de remplissage de la file FC0 afin d'illustrer le traitement des paquets prioritaires ou non dans le circuit d'aiguillage suivant l'invention. A titre d'exemple, on va supposer que la capacité de la zone active ZA de la file est de 16 mots, la capacité de la zone de transit ZT étant indifférente, par exemple de 8 mots.

Comme le montre la Fig. 4b, qui concerne un premier cas de fonctionnement, on suppose que, dans la file FC0, trois mots A, B* et C ont été successivement écrits, le signe * indiquant que le mot considéré est prioritaire (ceci étant valable dans la description des autres cas). Le signal FPN est donc dans ce cas à "0" et le signal FNV0 à "1". Comme dans toute file, le mot A est disponible à la sortie de la file, ce qui veut dire qu'il est présent sur les fils correspondants du multiplexeur MX. Quand le signal e, qui est appliqué à l'entrée de commande du multiplexeur MX, prend la valeur 1111, le contenu du mot A est transmis sur la sortie AD(0-7) du multiplexeur MX vers l'entrée d'adresse de lecture de la mémoire MP. Par ailleurs, au moment où le signal BT1 a pris la valeur 1111, le signal FNV0 a été transmis par le multiplexeur MNV à la bascule VP qui recopie ce signal sur le front avant du signal HD. Le diagramme du signal SVP de sortie de la bascule VP est montré à la Fig. 4a. Quand e = 1111, le signal SVP, ici à "1", est transmis par le démultiplexeur DMF à sa sortie VS0 reliée à la porte OU P5, et le signal AL passe à "1", comme le montre le diagramme VS0/AL de la Fig. 4a, puis reste à "1" pendant le temps d'octet e = 1111. Sur le front montant de HL, dans ce temps d'octet, un décalage est effectué dans la file et le mot A est remplacé par le mot B*, tandis que le mot C prend la seconde place. Ainsi, dans ce premier cas de fonctionnement, le mot A a été lu à travers le multiplexeur MX, puis a été évacué de la file par une opération de décalage. Le diagramme temporel AD(0-7) de la Fig. 4a montre qu'au temps d'octet e = 0000, le multiplexeur MX transmet le mot lu dans la file FC15.

A la Fig. 5b, qui illustre avec la Fig. 5a un second cas de fonctionnement, on a représenté trois états successifs de la file FC0 aux temps d'octet t0 (e = 14), t0 + 1 (e = 15) et t0 + 2 (e = 0). Au temps t0, la zone d'attente ZA est pleine et contient les mots A, B, C*, etc., X*, et la zone de transit ZT contient un mot, évidemment prioritaire, P*. Parmi les diagrammes temporels de la Fig. 5a, on a également montré la succession des temps t0, t0 + 1 et t0 + 2. Au passage du temps t0 au temps t0 + 1, comme dans le cas précédent illustré aux Figs. 4a et 4b, le mot A est lu à travers le multiplexeur MX, puis, vers la fin du temps t0 + 1, il est évacué de la file et remplacé par le mot B. C'est l'état t0 + 1 de la Fig. 5b.

En fait, au temps t0, le signal PP est à "1" ainsi que le signal FNV0. Quand e prend la valeur 15, la bascule B1 reçoit le signal VS0 du multiplexeur DMF et recopie le signal PP à "1", ce qui a pour effet de mettre la bascule B2 également à "1" par SB1. Au temps t0 + 1, sur le front montant de HL, le mot A est évacué de la file. Sur le front montant du signal HD suivant, la bascule B3 recopie l'état pp1 de la bascule B2 et fait passer l'état pp2 à "1". Au temps t0 + 1, le mot B, qui a pris la place de A, n'étant pas prioritaire, le signal SP est à "1" si bien que la porte P4, avec ses deux entrées à "1", maintient, à travers la porte OU P5, le signal AL à "1". Donc, au prochain front montant du signal HL, c'est-à-dire vers la fin du temps t0 + 2, le mot B est évacué par décalage de la file FC0. A la fin du temps t0 + 2, comme le montre la Fig. 5b, le contenu de la file est donc C*, etc., X*, P*.

Il faut noter que le mot B n'a pas traversé le multiplexeur MX, car au temps t0 + 2, le signal e avait la valeur 0 et le multiplexeur MX reliait la sortie de la file FC15 à sa sortie AD(0-7). Le paquet qui est mémorisé à l'adresse B dans la mémoire tampon MP ne sera donc pas transmis à la jonction sortante S0. Si ce paquet est uniquement destiné à cette jonction S0, il est perdu, mais s'il s'agissait d'un paquet destiné à être diffusé sur plusieurs jonctions autres que S0, il reste disponible dans les files d'attente associées à ces autres jonctions.

Par ailleurs, dès que le mot A a été évacué de la file FC0, le mot P* passe de la zone de transit ZT dans la zone d'attente ZA, si bien que le signal PP passe à "0". La sortie de l'inverseur I est alors à "1", comme le signal SP, puisque le mot B n'est pas prioritaire, si bien qu'au prochain front montant de HL, la sortie RAZ de la porte P2 remet la bascule B1 à "0". Au front montant suivant de HD, la bascule B2 dont l'entrée de données est à "0" recopie cet état qui est aussi recopié par la bascule B3 au prochain front montant de HD, c'est-à-dire à la fin du temps t0 + 1. Ainsi, au début du temps t0 + 2, la zone ZT est vide et l'ensemble des bascules B1 à B3 est à l'état de repos, le circuit CT0 peut donc continuer à fonctionner comme dans le premier cas illustré par les Figs. 4a et 4b.

Au temps t0 + 17, non montré, le mot C* sera normalement lu à travers le multiplexeur MX et évacué de la file FC0.

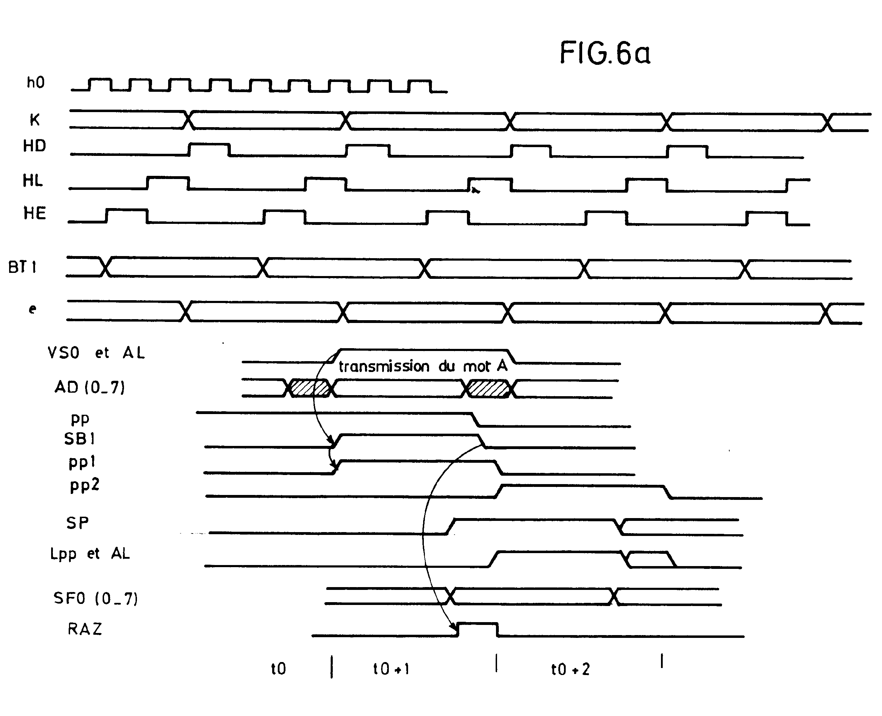

A la Fig. 6b, qui illustre avec la Fig. 6a un troisième cas de fonctionnement, on a représenté trois états successifs de la file FC0 aux temps d'octet t0 (e = 14), t0 + 1 (e = 15) et t0 + 2 (e = 0). Au temps t0, la zone active ZA est pleine et contient les mots A*, B, C*, etc., X*, et la zone de transit ZT contient un mot, évidemment prioritaire. P*. Dans les diagrammes temporels de la Fig 6a, on a également montré la succession de ces temps. Au passage du temps t0 au temps t0 + 1, le mot A* est normalement lu à travers le multiplexeur MX, puis, vers la fin du temps t0 + 1, il est évacué de la file et remplacé par le mot B. C'est l'état t0 + 1 de la Fig. 6b.

En fait, au temps t0, le signal PP est à "1" ainsi que le signal FNV0. Quand e prend la valeur 15, la bascule B1 reçoit le signal VS0 du démultiplexeur DMF et recopie le signal PP à "1", ce qui a pour effet de mettre la bascule B2 également à "1" par SB1. Au temps t0 + 1, sur le front montant de HL. le mot A* est évacué de la file. Sur le front montant du signal HD suivant, la bascule B3 recopie l'état pp1 de la bascule B2 et fait passer l'état pp2 à "1". Au temps t0 + 1, le mot B, qui a pris la place de A*, n'étant pas prioritaire, le signal SP passe à "1", si bien que la porte P4, avec ses deux entrées à "1", maintient AL à "1", à travers la porte P5. Donc, au prochain front montant du signal HL, c'est-à-dire vers la fin du temps t0 + 2, le mot B est évacué par décalage de la file FC0, mais il n'a pas été transmis par le multiplexeur MX. A la fin du temps t0 + 2, le contenu de la file est donc C*, etc., X*, P*. Au temps t0 + 17, non montré, le mot C* sera normalement lu à travers le multiplexeur MX et évacué de la file.

La remise à l'état initial des bascules B1 à B3 s'effectue comme dans le second cas décrit ci-dessus.

Le troisième cas de fonctionnement est donc pratiquement le même que le second, mais il était utile de le décrire pour faire comprendre que quel que soit l'état d'une file FCi au moment où le signal e prend la valeur i, le mot qui est présent à sa sortie, prioritaire ou non, est lu à travers le multiplexeur MX et sert à faire transmettre un paquet de la mémoire tampon MP vers la jonction sortante Si.

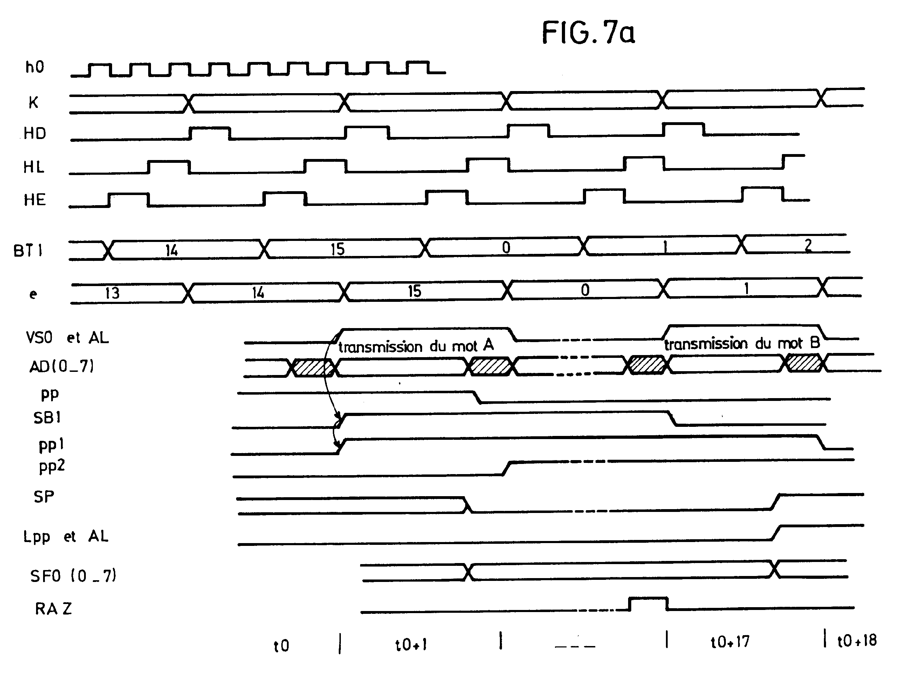

A la Fig. 7b, qui illustre, avec la Fig. 7a, un quatrième cas de fonctionnement, on a représenté quatre états successifs de la file FC0 aux temps d'octet t0 (e = 14), t0 + 1 (e = 15), t0 + 17 (e = 15) et t0 + 18 (e = 0). Au temps t0, la zone active ZA est pleine et contient les mots A, B*, C, D, etc., X, et la zone de transit ZT contient un mot, évidemment prioritaire, P*. Dans les diagrammes temporels de la Fig 7a, on a également montré ces temps d'octet. Au passage du temps t0 au temps t0 + 1, le mot A est normalement lu à travers le multiplexeur MX puis, vers la fin du temps t0 + 1, il est évacué de la file et remplacé par le mot B*, qui est prioritaire.

En fait, au temps t0, le signal PP est à "1" ainsi que le signal FNV0. Quand e prend la valeur 15, la bascule B1 reçoit le signal VS0 du démultiplexeur DMF et recopie le signal PP à "1", ce qui a pour effet de mettre la bascule B2 également à "1" par SB1. Au temps t0 + 1, sur le front montant de HL, le mot A est évacué de la file. Sur le front montant du signal HD suivant, la bascule B3 recopie l'état pp1 de la bascule B2 et fait passer l'état pp2 à "1". Le mot B*, qui a pris la place de A, étant prioritaire, le signal SP passe à "0" si bien que la sortie de la porte P4 reste à "0", ce qui, à travers la porte P5, ramène le signal AL à "0". Donc, aux prochains fronts montants de signal HL, jusqu'à t0 + 17, le mot B* ne peut être évacué. Pendant ce temps, le signal PP est revenu à "0" et la première entrée de la porte P3 est à "1", mais comme le signal SP est à "0", puisque le mot B* est prioritaire, la bascule B1 n'est pas remise à "0" par son entrée RAZ et les états des bascules B2 et B3 ne changent pas.

Au temps t0 + 17, où e reprend la valeur 15, le mot B* est lu à travers le démultiplexeur MX et, par MNV, VP et DMF, le signal VS0 est passé à "1", ce qui provoque l'évacuation du mot B*, si bien qu'au temps t0 + 17, le mot C apparaît à la sortie de la file. Si l'on suppose qu'entre le temps t0 et le temps t0 + 17, aucun mot n'a été écrit dans la file, on est ramené au premier cas de fonctionnement illustré aux Figs. 4a et 4b. Le mot C est lu au temps t0 + 33, etc.

En particulier, au temps t0 + 17, le signal VS0 a fait changer l'état de la bascule B1 puisque PP est à "0". Les bascules B2 et B3 sont donc à "0" au temps t0 + 18.

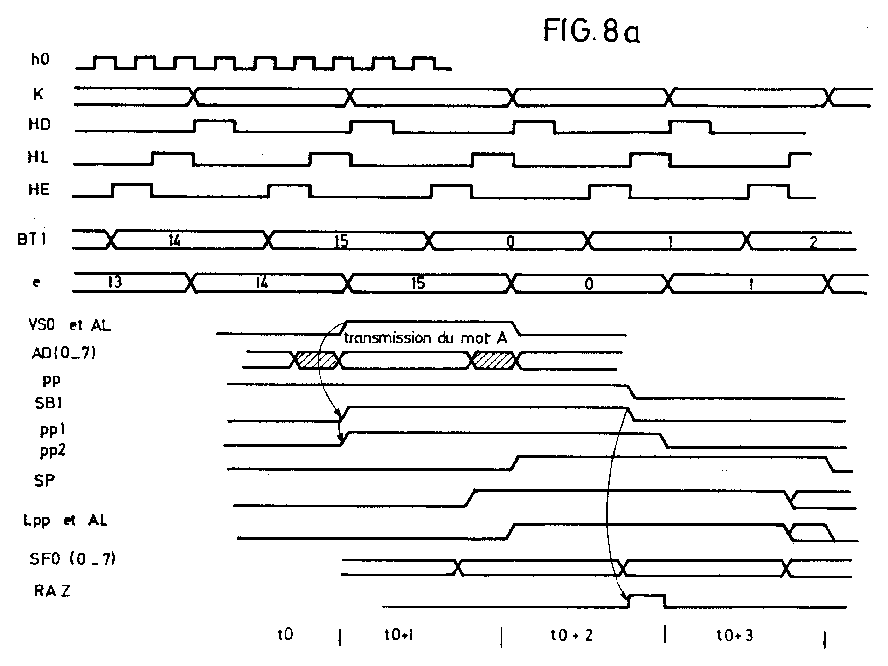

A la Fig. 8b, qui illustre, avec la Fig. 8a, un cinquième cas de fonctionnement, on a représenté quatre états successifs de la file FC0 aux temps d'octet, t0 (e = 14), t0 + 1 (e = 15), t0 + 2 (e = 0) et t0 + 3 (e = 1). Au temps t0, la zone active ZA est pleine et contient les mots A*, B, C, D, etc., X, et la zone de transit ZT contient deux mots, évidemment prioritaires, P* et Q*. Dans les diagrammes temporels de la Fig. 8a, on a également montré ces temps d'octet. Au passage du temps t0 au temps t0 + 1, le mot A* est normalement lu à travers le multiplexeur MX puis, vers la fin du temps t0 + 1, il est évacué de la file par le signal VS0 à "1" et remplacé par le mot B, non prioritaire. Donc au temps t0 + 1, le mot P* est entré dans la zone ZA, mais il reste le mot Q* dans la zone ZT.

En fait, au temps t0, le signal PP est à "1" ainsi que le signal FNV0. Quand e prend la valeur 15, la bascule B1 recopie le signal PP à "1", ce qui a pour effet de mettre la bascule B2 également à "1", puis la bascule B3, comme décrit ci-dessus. Le mot B qui a pris la place de A*, n'étant pas prioritaire, le signal SP passe à "1", si bien que la porte P4 maintient le signal AL à "1". Donc, au temps t0 + 1, sur le front montant de HL, le mot B est évacué par décalage de la file. Pendant ce temps, le mot Q* étant toujours dans la zone de transit ZT, le signal PP est resté à "1", ce qui maintient l'état de la bascule B1 et donc des bascules B2 et B3. Au temps t0 + 3, comme le mot C n'est pas non plus prioritaire, le signal SP reste à "1" et la porte P4 maintient encore le signal AL à "1". Donc, sur le front montant de HL, le mot C sera également évacué, sans être transmis par le multiplexeur MX. A la fin du temps t0 + 3, le signal PP est remis à "0", car le mot Q* est entré dans la zone ZA. Les bascules B1 à B3 sont alors remises à l'état initial, comme précédemment décrit, et le fonctionnement se poursuit comme dans le premier cas.

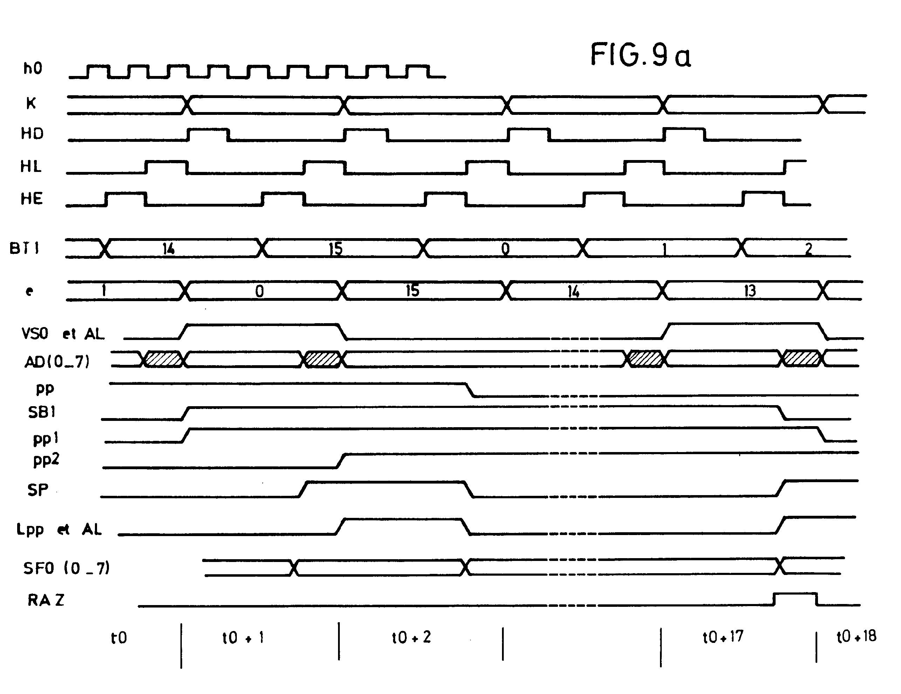

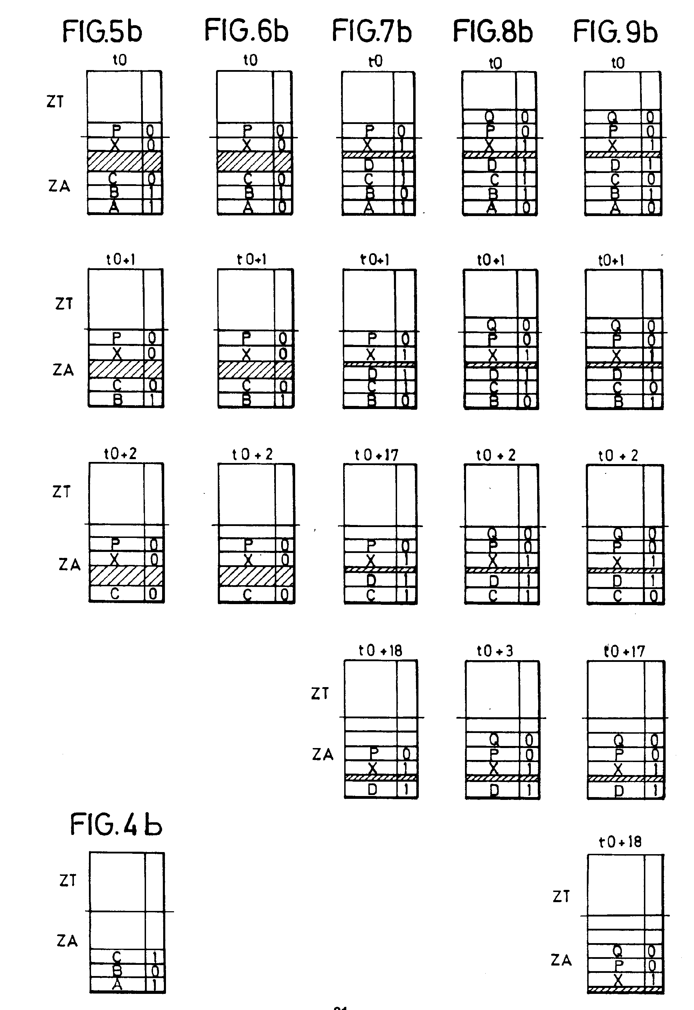

A la Fig. 9b, qui illustre, avec la Fig. 9a, un sixième cas de fonctionnement, on a représenté cinq états successifs de la file FC0 aux temps d'octet, t0 (e = 14), t0 + 1 (e = 15), t0 + 2 (e = 0), t0 + 17 (e = 15) et t0 + 18 (e = 0). Au temps t0, la zone active ZA est pleine et contient les mots A*, B, C*, D, etc., X, et la zone de transit ZT contient deux mots P* et Q*. Dans les diagrammes temporels de la Fig. 9a, on a également montré ces temps d'octet. Au passage du temps t0 au temps t0 + 1, le mot A* est normalement lu à travers le multiplexeur MX, puis, vers la fin du temps t0 + 1, il est évacué de la file par le signal VS0 à "1" et remplacé par le mot B, non prioritaire. Donc, au temps t0 + 1, le mot P* est entré dans la zone ZA, mais il reste toujours le mot Q* dans la zone ZT.

En fait, au temps t0, le signal PP est à "1" ainsi que le signal FNV0. Quand, au temps t0 + 1, e prend la valeur 15, la bascule B1 recopie le signal PP à "1", ce qui met la bascule B2 également à "1", puis la bascule B3, comme décrit ci-dessus. Le mot B qui a pris la place du mot A*, n'étant pas prioritaire, le signal SP passe à "1", si bien que la porte P4 maintient le signal AL à "1". Donc, au temps t0 + 2, sur le front montant de HL, le mot B est évacué par décalage de la file. Pendant ce temps, le mot Q* étant toujours dans la zone de transit ZT, le signal PP était resté à "1", ce qui maintenait l'état de la bascule B1 et donc des bascules B2 et B3. Au temps t0 + 3, non montré, comme le mot C* est prioritaire, le signal PP passe à "0", ce qui bloque la porte P4. Le mot C* ne sera donc pas évacué sur le front montant de HL dans le temps t0 + 3, mais il sera lu à travers le multiplexeur MX au temps t0 + 17, quand e reprend la valeur 15 qui fait délivrer le signal VS0 par le démultiplexeur DMF.

Par ailleurs, à la fin du temps t0 + 2, le mot Q* est entré dans la zone ZA alors que la zone ZT est devenue vide, ce qui fait passer le signal PP à "0". On est donc ramené au premier cas de fonctionnement en ce qui concerne la lecture des mots. Toutefois la bascule B1 avait gardé son état de travail, car le signal VS0 n'apparaît qu'au temps t0 + 17, et que la porte P3 est restée bloquée par le signal SP au niveau "0" indiquant que le mot C* est prioritaire. Au début du temps t0 + 17, les signaux SB1, pp1 et pp2 sont donc toujours à "1". Le signal VS0 remet la bascule B1 au repos et les bascules B1 et B2 changent successivement d'état comme on l'a décrit ci-dessus en relation avec le second cas illustré par les Figs. 5a et 5b.

Dans les exemples de fonctionnement précédents, on a supposé qu'au cours des fonctionnements, aucun nouveau mot n'entrait dans la file. Il est bien évident que le cas peut se produire car, à chaque temps d'octet, un mot peut être écrit si le paquet entrant est destiné à la jonction sortante concernée. L'homme de métier, ayant pris connaissance de la description des six cas particuliers de fonctionnement, comprendra certainement que les circuits CT0 à CT15 les traiteraient de la même façon.

Dans l'exemple de réalisation du circuit d'aiguillage montré à la Fig. 3, le fil qui transmet le signal p est multiplé sur les entrées correspondantes des files FC0 à FC15. Quand il s'agit d'un paquet entrant dans le commutateur et destiné à une seule jonction de sortie, ce fil unique convient parfaitement. Quand il s'agit d'un paquet entrant qui est destiné à être diffusé, c'est-à-dire à être orienté vers plusieurs jonctions de sortie désignées par les fils individuels du faisceau s, le fil p unique implique que le paquet est ou non prioritaire vers toutes ces jonctions. Pour le cas où l'on désire qu'un paquet diffusé soit prioritaire vers certaines jonctions sortantes et non prioritaire vers d'autres, il faut prévoir seize fils p individuellement affectés aux files FC0 à FC15, comme les fils du faisceau s.

Bien entendu, quand la zone ZA d'une file est pleine d'adresses de paquets prioritaires et qu'il en arrive d'autres, ces derniers ne pourront pas être émis. Toutefois, la conception et le calcul des conditions de trafic permettent de rendre cette circonstance extrêmement rare, sauf accident. A ce sujet, il faut savoir que l'unité de commande UCC du commutateur est utilisée à chaque établissement de circuit virtuel et donc connaît la charge moyenne de chaque jonction sortante. En cas de trop nombreuses communications prioritaires demandées vers une jonction sortante, cette unité peut en différer certains établissement pour éviter des engorgements.

## Revendications

1. Système de commutation de paquets d'information affectés de priorités sémantiques à deux niveaux entre des multiplex temporels entrants (E0 à E15) et des multiplex temporels sortants (S0 à S15), l'adresse de lecture (K) d'un paquet dans la mémoire tampon (MP) du commutateur étant rangée dans la file d'attente (FC0 à FC15) associée à la jonction sortante (S0 à S15) destinée à transmettre le paquet, caractérisé en ce que ladite adresse de lecture (K) est accompagnée d'un bit (p) définissant le niveau de priorité du paquet, chaque file d'attente (FC0 à FC15) comprenant en série entre l'entrée et la sortie deux zones (ZT, ZA), l'écriture dans la première zone (ZT) n'étant, quand la seconde zone (ZA) est pleine, accessible qu'aux paquets de haut niveau de priorité (p = 0), et, en cas de débordement de la seconde zone (ZA), entre deux lectures de files, des adresses de lecture de paquets de bas niveau de priorité (p = 1), qui avaient été mémorisées plus tôt dans la seconde zone (ZA) que l'adresse de lecture de paquet de haut niveau de priorité (p = 0) la plus ancienne encore présente dans la file (FC0 à FC15), étant détruites en nombre égal, au maximum, au nombre d'adresses de lecture mémorisées dans la première zone (ZT).

2. Système suivant la revendication 1, caractérisé en ce qu'en cas de débordement de la seconde zone (ZA), avec M adresses de lecture dans la première zone (ZA) et plus de M adresses de lecture de paquets de bas niveau de priorité (p = 1) entre l'adresse de lecture présente à la sortie de la file (FC0 à FC15) et la plus ancienne adresse de lecture de paquet de haut niveau de priorité (p = 0) présente dans la seconde zone (ZA), après le temps de lecture de la file concernée, à chacun des M temps d'octets suivants, la file (FC0 à FC15) subit un décalage.

3. Système suivant la revendication 1, caractérisé en ce qu'en cas de débordement de la seconde zone (ZA), avec M adresses de lecture dans la première zone (ZT) et moins de M adresses de lecture de paquet de bas niveau de priorité (p = 1) entre l'adresse présente à la sortie de la file (FC0 à FC15) et la plus ancienne adresse de lecture de paquet de haut niveau de priorité (p = 0) contenue dans la seconde zone (ZA), après le temps de lecture de la file concernée, la file (FC0 à FC15) subit assez de décalages pour que ladite adresse de lecture de paquet de haut niveau de priorité (p = 0) soit présente à la sortie de la file, les décalages étant effectués séquentiellement au rythme des temps octet après le temps de lecture.

4. Système suivant l'une des revendications 1 à 3, caractérisé en ce que chaqus file (FC0 à FC15) est associée à un circuit de traitement (CT0 à CT15) et comporte une entrée de données pour recevoir, d'une part, le mot d'adresse de lecture (K) et, d'autre part, le bit de niveau de priorité (p), soit "1" pour le niveau has et "0" pour le niveau haut, une entrée d'autorisation d'écriture (AE), une entrée d'horloge d'écriture (HE), une sortie de données délivrant, d'une part, le mot d'adresse de lecture (K) et, d'autre part, le bit de priorité (p), une entrée d'autorisation de décalage (AL), une entrée d'horloge de lecture (HL), une sortie d'indication de seconde zone pleine (FPN) et une sortie d'indication de première zone non vide (PP), chaque circuit de traitement comprenant une première porte ET (P1) dont une entrée reçoit le signal de sélection (s) d'autorisation d'écriture dans la file (FC0 à FC15) et dont la seconde entrée est reliée à la sortie d'une porte NON-ET (P2) dont une entrée reçoit le bit de priorité (p) et dont l'autre entrée est reliée à la sortie d'indication de seconde zone pleine (FPN), la sortie de la première porte ET (P1) étant reliée à l'entrée d'autorisation d'écriture (AE).

5. Système suivant la revendication 4, caractérisé en ce que chaque circuit de traitement (CT0 à CT15) comporte encore une porte OU (P5) dont une entrée est activée à chaque temps de lecture (e) de la file et dont une seconde entrée est reliée à la sortie d'une seconde porte ET (P4) dont une entrée reçoit le bit de priorité présent à la sortie de la file et dont l'autre est reliée à la sortie d'un circuit de mémoire (B1, B2, B3, P3, I) dont l'entrée est reliée à la sortie (PP) d'indication de première zone non vide et dont l'entrée de remise à zéro (RAZ) est activée quand la sortie d'indication de première zone non vide (PP) est désactivée et que le bit de priorité (p) présent à la sortie de la file est à "0", la remise à zéro étant retardée d'un temps octet.

6. Système suivant l'une des revendications 1 à 5, caractérisé en ce que l'affectation de l'un des deux niveaux de priorité à chaque paquet est effectué en même temps que la conversion d'étiquette d'entrée (e, i) en étiquette de sortie (s, j) et la sélection d'une ou de plusieurs files d'attente (FC0 à FC15) dans lesquelles est rangée l'adresse de lecture du paquet, le bit (p) définissant le niveau de priorité étant fourni par le moyen (MC) effectuant ladite conversion.

7. Système suivant la revendication 6, caractérisé en ce que ledit moyen de conversion (MC) fournit un bit de niveau de priorité (p) commun vers toutes les files d'attente dans lesquelles est rangée l'adresse de lecture du paquet.

8. Système suivant la revendication 6, caractérisé en ce que ledit moyen de conversion (MC) fournit sélectivement le bit (p = 0) de haut niveau de priorité vers certaines des files d'attente dans lesquelles est rangée l'adresse de lecture du paquet, et le bit (p = 1) de bas niveau de priorité vers les autres.

9. Système suivant l'une des revendications 6 à 8, caractérisé en ce que le chargement des informations de commande concernant la conversion, la sélection des files d'attente et l'affectation des niveaux de priorité est effectué dans le moyen de conversion (MC) au moment de l'établissement de la communication.

## Patentansprüche

1. Vermittlungssystem für Datenpakete mit Vorrang mit zwei Pegeln zwischen ankommenden Zeitmultiplexen (E0 bis E15) und abgehenden Zeitmultiplexen (S0 bis S15), wobei die Leseadresse (K) eines Paketes in dlem Pufferspeicher (MP) des Kommutators in der Wartereihe (FC0 bis FC15) angeordnet ist, der dem zum Übertragen des Paketes bestimmten Ausgangsanschluß (S0 bis S15) zugeordnet ist, **dadurch gekennzeichnet**, daß die Leseadresse (K) von einem Bit (p) begleitet ist, das den Vorangswert des Paketes bestimmt, daß jede Wartereihe (FC0 bis FC15) zwischen dem Eingang und dem Aunsgang zwei Zonen (ZT, ZA) in Reihe enthält, daß die geschriebenen Zeichen in der ersten Zone (ZT), wenn die zweite Zone (ZA) voll ist, nur für die Pakete mit hohem Vorangswert (p = 0) zugänglich sind, und im Falle eines Überlaunfens der zweiten Zone (ZA) zwischen zwei Reihen-Lesevorgängen die Leseadressen für Pakete mit niedrigem Vorrangswert (p = 1), die früher als die Leseadresse des Paketes mit hohem Vorrangswert (p = 0) in der zweiten Zone (ZA) gespeichert worden sind, von denen die älteste noch in der Reihe (FC0 bis FC15) anwesend ist, in gleicher Anzahl maximal bis auf die Zahl der in der ersten Zone (ZT) gespeicherten Leseadressen zerstört werden.

2. System nach Anspruch 1, **dadurch gekennzeichnet**, daß im Falle eines Überlaufes der zweiten Zone (ZA) mit M Leseadressen in der ersten Zone (ZA) und mehr als M Leseadressen für Pakete mit niedrigem Vorrangswert (p = 1) zwischen der am Ausgang der Reihe (FC0 bis FC15) anwesenden Leseadresse und der ältesten in der zweiten Zone (ZA) anwesenden Leseadresse für Paket mit hohem Vorrangswert (p = 0) nach der Lesezeit der betroffenen Reihe bei jeder der M folgenden Wortzeiten die Reihe (FC0 bis FC15) einer Verschiebung unterworfen wird.

3. System nach Anspruch 1, **dadurch gekennzeichnet**, daß bei einem Überlaufen der zweiten Zone (ZA) mit M Leseadressen in der ersten Zone (ZT) und weniger als M Leseadressen für Pakete mit niedrigem Vorrangswert (p = 1) zwischen der am Ausgang der Reihe (FC0 bis FC15) awesenden Adresse und der ältesten, in der zweiten Zone (ZA) anwesenden Leseadresse für Pakete mit hohem Vorrangswert (p = 0) nach der Lesezeit der betroffenen Reihe (FC0 bis FC15) einer darart ausreichenden Verschiebung unterworfen wird, daß die Leseadresse für Pakete mit hohem Vorrangswert (p = 0) am Ausgang der Reihe anwesend ist, und daß die Verschiebung sequentiell im Rhythmus der Wortzeichen nach der Lesezeit erfolgt.

4. System nach einem der Ansprüche 1 bis 3, **dadurch gekennzeichnet**, daß jede Reihe (FC0 bis FC15) einer Verarbeitungsschaltung (CT0 bis CT15) zugeordnet ist und folgendes enthält: einen Dateneingang, um einerseits das Leseadressen-Wort (K) und andererseits das Bit für den Vorrangswert (p), und zwar "1" für den niedrigen Wert und "0" für den hohen Wert, zu empfangen, einen Schreib-Berechtigungseingang (AE), einen Schreib-Takteingang (HE), einen Datenausgang, der einerseits das Leseadressen-Wort (K) und andererseits das Bit für den Vorrang (p) liefert, einen Eingang für die Verschiebungsberechtigung (AL), einen Eingang für der Lesetakt (HL), einen Ausgang für die Anzeige der vollen zweiten Zone (FPN) und einen Ausgang für die Anzeige der ersten nicht leeren Zone (PP), daß jede Verarbeitungsschaltung ein erstes AND-Gatter (P1) enthält, dessen einer Eingang das Berechtigungs-Selektionssignal (s) für das Schreiben in die Reihe (FC0 bis FC15) empfängt und dessen zweiter Eingang mit dem Ausgang eines NAND-Gatters (P2) verbunden ist, dessen einer Eingang das Vorrangs-Bit (p) empfängt und dessen anderer Eingang mit dem Ausgang für die Anzeige der zweiten vollen Zone (FPN) verbunden ist, und daß der Ausgang des ersten AND-Gatters (P1) mit dem Schreib-Berechtigungseingang (AE) verbunden ist.

5. System nach Anspruch 4, **dadurch gekennzeichnet**, daß jede Verarbeitungsschaltung (CT0 bis CT15) noch ein OR-Gatter (P5) enthält, dessen einer Eingang bei jeder Lesezeit der Reihe aktiviert wird und dessen zweiter Eingang mit dem Ausgang eines zweiter AND-Gatters (P4) verbunden ist, dessen einer Eingang das an dem Ausgang der Reihe anwesende Vorrangs-Bit empfängt und dessen anderer Eingang mit dem Ausgang einer Speicherschaltung (B1, B2, B3, P3, I) verbunden ist, dessen Eingang mit dem Ausgang (PP) für die Anzeige der ersten nicht leeren Zone verbunden ist und dessen Null-Rücksetzeingang (RAZ) aktiviert wird, wenn der Ausgang für die Anzeige der ersten nicht leeren Zone (PP) inaktiviert wird, und daß das am Ausgang der Reihe anwesende Vorrangs-Bit (p) bei "0" ist und das Rücksetzen auf null um die Zeite ines Wortes verzögert wird.

6. System nach einem der Ansprüche 1 bis 5, **dadurch gekennzeichnet**, daß die Zuordnung einer der beiden Vorrangswerte zu jedem Paket in derselben Zeit erfolgt wie die Umsetzung des Eingangslabels (e, i) in das Ausgangslabel (s, j) und die Auswahl eines oder mehrerer Wartereihen (FC0 bis FC15), in denen die Paket-Leseadresse abgelegt ist, und daß das den Vorrangswert bestimmende Bit durch das die Umsetzung bewirkende Mittel (MC) erzeugt wird.

7. System nach Anspruch 6, **dadurch gekennzeichnet**, daß das Umsetzmittel (MC) ein Bit für den Vorrangswert (p) erzeugt, der für alle Wartereihen gemeinsam ist, in denen die Paket-Leseadresse abgelegt ist.

8. System nach Anspruch 6, **dadurch gekennzeichnet**, daß das Umsetzmittel (MC) selektiv das Bit (p = 0) für den hohen Vorrangswert für bestimmte Wartereihen, in denen die Paket-Leseadresse abgelegt ist, und das Bit (p = 1) für den niedrigen Vorrangswert für die anderen zur Verfügung stellt.

9. System nach einem der Ansprüche 6 bis 8, **dadurch gekennzeichnet**, daß das Laden der die Umsetzung betreffenden Steuerinformationen, die Selektion der Wartereihen und die Zuordnung der Vorrangswerte in dem Umsetzmittel (MC) im Augenblick der Herstellung der Kommunikation erfolgen.

**Claims**

1. A system of switching of packets of information affected by semantic priorities with two levels between incoming time multiplexes (E0 TO E15) and outgoing time multiplexes (S0 to S15), the writing address (K) of a packet in the buffer memory (MP) of the commutator being placed in the waiting file (FC0 to FC15) associated with the outgoing junction (S0 to S15) intended for transmitting the packet, characterised in that the said reading address (K) is accompanied by a bit (p) defining the level of priority of the packet, each waiting file (FC0 to FC15) comprising in series between the input and the output two zone (ZT, ZA), the waiting in the first zone (ZT) only being accessible, when the second zone (ZA) is full, to the packets of high level priority (p=0) and in case of overflow of the second zone (ZA) between two file readings, packet reading addresses of low level of priority (p=1) which had been memorized earlier in the second zone (ZA), the oldest packet reading address of high level of priority (p=0) still present in the file (FC0 to FC15) being destroyed in number equal, at a maximum, to the number of reading addresses memorized in the first zone (ZT).

2. A system according to claim 1, characterised in that in case of overflow of the second zone (ZA) with M reading addresses in the first zone (ZA) and more than M packet reading addresses of low level of priority (p=1) between the reading address present at the output of the file (FC0 to FC15) and the oldest packet reading address of high level of priority (p=0) present in the second zone (ZA) after the reading time of the file concerned at each of the following M octet time, the file (FC0 to FC15) undergoes a shift.

3. A system according to claim 1, characterised in that in case of overflow of the second zone (ZA) with M reading addresses in the first zone (ZT) and less M packet reading addresses of low level of priority (p=1) between the address present at the output of the file (FC0 to FC15) and the oldest packet reading address of high level of priority (p=0) contained in the second zone (ZA) after the reading time of the file concerned, the file (FC0 to FC15) undergoes sufficient shifts in order that the said packet reading address of high level of priority (p=0) may be present at the output of the file, the shifts being effected in sequence at the rhythm of the octet times after the reading time.

4. A system according to one of the claims 1 to 3, characterised in that each file (FC0 to FC15) is associated with a processing circuit (CT0 to CT15) and comprises a data input for receiving, on the one hand the reading address word (K) and on the other hand, the bit of level of priority (p) that is "1" for the low level and "0" for the high level, an authorization of writing input (AE), a writing clock input (HE), a data output delivering on the one hand the reading address word (K) and on the other hand the priority bit (p), an authorization of shift input (AL), a reading clock (HL), an indication of full second zone output (FPN) and an indication of first not empty zone output (PP) each processing circuit comprising a first AND gate (P1) one input of which receives the selection signal (s) of authorization of writing in the file (FC0 to FC15) and the second input is connected to the output of a NO-AND gate (P2) one input of which receives the priority bit (p) and the other input of which is connected to the indication of full second zone output (FPN), the output of the first AND gate (P1) being connected to the authorization of writing input (AE).

5. A system according to claim 4, characterised in that each processing circuit (CT0 to CT15) comprises again an OR gate (P5) one input of which is activated at each reading time (e) of the file and a second input of which is connected to the output of a second AND gate (P4) one input of which receives the priority bit present at the output of the file and the other of which is connected to the output of a memory circuit (B1, B2, B3, P3, I) the input of which is connected to the indication of first not empty zone output (PP) and the reset to zero input (RAZ) of which is activated when the indication of first not empty zone output (PP) is deactivated and that the priority bit (p) present at the output of the file is at "0" the resetting to zero being delayed by one octet time.

6. A system according to one of the claims 1 to 5, characterised in that the allocation of one of the two levels of priority to each packet is effected at the same time as the conversion of label input (e,i) into output label (s,j) and the selection of one or several waiting files (FC0 to FC15) in which is placed the packet reading address, the bit (p) defining the level of priority being supplied by the means (MC) effecting the said conversion.

7. A system according to claim 6, characterised in that the said means of conversion (MC) supplies a bit of priority level (p) common towards all the waiting files in which is placed the packet reading address.

8. A system according to claim 6, characterised in that the said means of conversion (MC) supplies selectively the bit (p=0) of high level of priority towards certain of the waiting files in which is placed the packet reading address and the bit (p=1) of low level of priority towards the others.

9. A system according to one of the claims 6 to 8, characterised in that the charging of the command information concerning the conversion, the selection of the waiting files and the allocation of the levels of priority is effected in the means of conversion (MC) at the moment of the establishment of the communication.

FIG.1

FIG. 2

EP 0 300 942 B1

FIG. 3

EP 0 300 942 B1

FIG.4a

FIG.5a

# FIG.6a

h0

K

HD

HL

HE

BT1

e

VSO  et  AL

transmission du mot A

AD (0_7)

PP
SB1
pp1
pp2

SP

Lpp  et  AL

SFO (0_7)

RAZ

t0 | t0 + 1 | t0 + 2 |

EP 0 300 942 B1

# FIG.7a

transmission du mot A

transmission du mot B

h0
K
HD
HL
HE
BT1
e
VS0 et AL
AD(0_7)
pp
SB1
pp1
pp2
SP
Lpp et AL
SF0 (0_7)
RAZ

| 14 | 15 | 0 | 1 | 2 |

| 13 | 14 | 15 | 0 | 1 |

t0    t0+1    ___    t0+17    t0+18

EP 0 300 942 B1

FIG. 8a

EP 0 300 942 B1

FIG.9a

h0
K
HD
HL
HE

BT1    14    15    0    1    2
e    1    0    15    14    13

VS0 et AL
AD(0_7)
pp
SB1
pp1
pp2
SP
Lpp et AL
SF0 (0_7)
RAZ

t0    t0+1    t0+2    t0+17    t0+18

EP 0 300 942 B1

FIG.5b  FIG.6b  FIG.7b  FIG.8b  FIG.9b

FIG.4b